Europäisches Patentamt

European Patent Office

Office européen des brevets

(11) Veröffentlichungsnummer : **0 007 042**
**B2**

(12) **NEUE EUROPÄISCHE PATENTSCHRIFT**

(19)

(45) Veröffentlichungstag der neuen Patentschrift :
03.12.86

(21) Anmeldenummer : 79102176.9

(22) Anmeldetag : 29.06.79

(51) Int. Cl.⁴ : **C 08 F236/04**, C 08 F212/02,
C 08 F 2/22

(54) Verfahren zur Herstellung von emulgatorfreien Kautschuklatices.

(30) Priorität : 11.07.78 DE 2830470

㊸ Veröffentlichungstag der Anmeidung :
23.01.80 Patentblatt 80/02

(45) Bekanntmachung des Hinweises auf die Patenterteilung : 13.04.83 Patentblatt 83/15

(45) Bekanntmachung des Hinweises auf die Entscheidung
über den Einspruch : 03.12.86 Patentblatt 86/49

(84) Benannte Vertragsstaaten :
**BE DE FR GB IT NL SE**

(56) Entgegenhaltungen :
**US-A- 3 324 066**
**US-A- 3 882 070**
**B.W. Greene: J. Colloid and Interface Sci., 43, (No.2,**
**May 1973), S. 462-472**
**G.W. Ceska: J. Polym. Applied Sci., 18 (1974), S. 427 ff**
**van den Hul (et al.): Br. Polym. 2 (1970), S. 121 ff**

(73) Patentinhaber : **BAYER AG**
**Konzernverwaltung RP Patentabteilung**
**D-5090 Leverkusen 1 Bayerwerk (DE)**

(72) Erfinder : **Heins, Ferdinand, Dr.**
**Adalbert-Stifter-Strasse 49**
**D-4006 Erkrath 1 (DE)**
Erfinder : **Matner, Martin, Dr.**
**Dorfstrasse 14**
**D-5068 Odenthal (DE)**

EP 0 007 042 B2

## Beschreibung

Die vorliegende Erfindung betrifft ein Verfahren zur Herstellung emulgatorfreier Kautschuklatices aus Methacrylsäure und acyclischen konjugierten Dienen sowie Arylvinylmonomeren und/oder (Meth)acrylnitril.

Üblicherweise werden bei der konventionellen Emulsionspolymerisation die Monomeren in Gegenwart eines freie Radikale liefernden Initiators und eines Emulgiermittels polymerisiert, welches die gebildeten Polymerpartikel in dispergiertem Zustand hält. Die Anwesenheit von Emulgatoren führen jedoch häufig zu Schwierigkeiten bei der Verarbeitung der Latices infolge zu geringer mechanischer Stabilität oder durch Schaumbildung sowie zu einer verminderten Naßfestigkeit der mit derartigen Dispersionen hergestellten Überzüge oder der damit behandelten Substrate sowie zu einer verminderten Haftung des Bindemittels auf den Substraten.

Es ist bekannt, daß man die Stabilität von Kautschuklatices erhöhen und die Wasserempfindlichkeit der Filme herabsetzen kann, indem man die Emulsionspolymerisation in Gegenwart von Emulgatoren durchführt, welche in das Polymere eingebaut werden, wie z. B. Halbester aus Maleinsäure und Fettalkoholen (DE-AS 1 011 548) oder 4-Styrolundecansäure (US-PS 2 868 755). Durch diese innere Bindung der oberflächenaktiven Substanzen wird die Empfindlichkeit der Latices gegenüber Scherkräften wesentlich verringert im Vergleich zu solchen Latices, bei denen die Polymerteilchen durch Adsorption von Emulgatormolekülen stabilisiert sind.

Auch durch Einbau von Monomeren mit stark dissoziierenden Gruppen werden Kautschuklatices erhalten, die eine wesentlich höhere Stabilität aufweisen als solche, die adsorbierte oberflächenaktive Substanzen enthalten. Derartige stabile, emulgatorfreie Kautschuklatices werden durch Copolymerisation von Sulfonsäuregruppen tragenden Monomeren in wäßriger Emulsion erhalten, z. B. durch Einbau von 4-Styrolsulfonsäure (US-PS 2 913 429 und 3 306 871) oder mit Hilfe von Estern aus Acryl- oder Methacrylsäure und 2-Hydroxyethansulfonsäure wie z. B. 2-Sulfoethylacrylat (US-PS 2 914 499). Auf diese Weise wird eine Stabilisierung der Latexteilchen durch Sulfonatgruppen erreicht, die für eine ausreichende Ladung auf der Teilchenoberfläche sorgen.

Eine Variante davon wird in US-PS 3 882 070 beschrieben, wo stabile Latices dadurch erhalten werden, daß N-Methylolacrylamid einpolymerisiert wird, das mit dem Katalysator Sulfatendgruppen bildet. Bei Ersatz der sulfatierten Methylolgruppe durch Acrylsäure werden Einbußen an Stabilität beobachtet.

Aus dem US-Patent 3 784 498 ist es bekannt, emulgatorfreie carboxylierte Kautschuklatices dadurch herzustellen, daß man zunächst einen Latex aus der Gesamtmenge der äthylenisch ungesättigten Carbonsäure und einem Teil der wasserunlöslichen Monomeren bei einem pH-Wert von etwa 2 bis 4 herstellt, nach Umstellung des pH-Wertes auf 7 bis 10 den Rest der Monomeren hinzufügt und weiterpolymerisiert, bis ein vollständiger Umsatz erreicht ist. Durch diese Maßnahme wird die Dissoziation der Carboxylgruppen drastisch erhöht, so daß während der zweiten Polymerisationsstufe die Polymerteilchen durch die Carboxylatgruppen ausreichend stabilisiert sind und dadurch eine Koagulation vermieden wird. Die notwendige Erhöhung des pH-Wertes von 2 bis 4 auf 7 bis 10, welches vorzugsweise mit wäßrigem Ammoniak vorgenommen wird, erschwert das Verfahren jedoch, da die Zugabe des Ammoniaks langsam und vorsichtig erfolgen muß und oftmals zu starker Koagulatbildung führt.

Es wurde nun gefunden, daß emulgatorfreie carboxylierte Latices aus Methacrylsäure, Dienen sowie Arylvinylmonomeren und/oder (Meth)acrylnitril unter Verwendung eines Peroxodisulfats als Radikalinitiator erhalten werden, wenn bei einem pH-Wert von 3,5 bis 7 mindestens ein Teil von Methacrylsäure, ein Teil von Dien und weiteren Monomeren polymerisiert wird, der Rest der Monomeren ein- oder mehrstufig zugegeben wird und die Polymerisation bei diesem pH-Wert jeweils bis zu einem Umsatz von mindestens 50 % der Monomeren und in der letzten Stufe bis zu einem Umsatz von 85 bis 100 % der Monomeren durchgeführt wird. Das erfindungsgemäße Verfahren ermöglicht es, entsprechende Kautschuklatices ohne Verwendung von Emulgatoren herzustellen.

Das Verfahren wird im allgemeinen so durchgeführt, daß man in einem Reaktor Wasser und mindestens einen Teil von Methacrylsäure, einen Teil von konjugiertem Dien sowie Arylvinylmonomeren und/oder (Meth)acrylnitril vorlegt und die Polymerisation bei einer Temperatur oberhalb 70 °C, vorzugsweise bei 75 bis 95 °C mit einer wäßrigen, vorzugsweise ammoniakalischen Peroxodisulfat-Lösung initiiert, deren Ammoniakgehalt so bemessen wird, daß die Polymerisation bei einem pH zwischen 3,5 und 7 stattfindet. Man läßt bis zu einem Umsatz von mindestens 50 % polymerisieren und fügt je nach Druckverhältnissen im Reaktor und angestrebter Endkonzentration chargenweise weitere Monomere und gegebenenfalls Methacrylsäure und erneut wäßrige — vorzugsweise ammoniakalische Peroxodisulfat-Lösung hinzu, so daß die Polymerisation bei einem pH-Wert zwischen 3,5 und 7 weitergeführt wird.

Im allgemeinen genügen bei dieser Polymerisation zwei oder drei Stufen, doch sind auch mehr Polymerisationsstufen möglich. Bei jeder Polymerisationsstufe wird so lange polymerisiert, bis ein Umsatz von jeweils mindestens 50 % erreicht ist. In der letzten Stufe wird die Polymerisation bis zu einem Umsatz von 85 bis 100 % der Monomeren durchgeführt. Man erhält einen Latex mit einem Feststoffgehalt von 30 bis 65, vorzugsweise von 40 bis 60 Gew.-%.

Zur Einstellung des pH-Wertes von 3,5 bis 7 während der Polymerisation sind sowohl organische als auch anorganische Basen geeignet, z. B. NaHCO$_3$, Ammoniak oder Triäthylamin. Vorzugsweise verwendet man aliphatische Amine und Ammoniak, wobei Ammoniak besonders bevorzugt ist.

Die Gesamtmenge des bei dem erfindungsgemäßen Verfahren als Initiator verwendeten Peroxodisulfats beträgt 0,5 bis 3,0 Gew.-Teile, bezogen auf die Gesamtmenge an Monomeren. Als Initiatoren geeignet sind Salze der Peroxodischwefelsäure wie Natrium-, Kalium- oder bevorzugt Ammoniumperoxodisulfat. In einer bevorzugten Ausführungsform initiiert man die einzelnen Polymerisationsstufen durch Zugabe einer wäßrigammoniakalischen Peroxodisulfat-Lösung, wodurch gleichzeitig der pH-Wert auf 3,5 bis 7 eingestellt wird.

Überraschenderweise ist das erfindungsgemäße Verfahren so universell anwendbar, daß das Verhältnis von konjugiertem Dien zu Arylvinylmonomer und/oder Methacrylnitril in sehr weiten Grenzen variiert werden kann. Dementsprechend erlaubt die vorliegende Erfindung die Herstellung von solchen Kautschuklatices aus den o. g. Monomeren, welche 10 bis 90 Gew.-Teile eines oder mehrerer acyclischer konjugierter Diene mit 4 bis 9 Kohlenstoffatomen, 0 bis 90 Gew.-Teile eines oder mehrerer Arylvinylmonomerer mit 8 bis 12 Kohlenstoffatomen und/oder 0 bis 50 Gew.-Teile (Meth)acrylnitril enthalten, wobei die Summe der letzten beiden Komponenten 10 bis 90 Gew.-Teile beträgt.

Gegenstand der Erfindung ist somit ein Verfahren zur Herstellung eines emulgatorfreien Kautschuklatex aus 1 bis 6 Gew.-Teilen Methacrylsäure und 94 bis 99 Gew.-Teilen eines Gemisches aus 10 bis 90 Gew.-Teilen eines oder mehrerer acyclischer konjugierter Diene mit 4 bis 9 Kohlenstoffatomen und 10 bis 90 Gew.-Teilen eines oder mehrerer Arylvinylmonomerer mit 8 bis 12 Kohlenstoffatomen und/oder (Meth)acrylnitril, wobei die Menge an (Meth)acrylnitril maximal 50 Gew.-Teile beträgt, dadurch gekennzeichnet, daß man

a) eine wäßrige Emulsion herstellt, indem man mindestens einen Teil von Methacrylsäure, einen Teil von Dien und weiteren Monomeren zu Wasser zufügt,

b) durch Zugabe einer wäßrig basischen Lösung eines Peroxodisulfats, deren Gehalt an organischen oder anorganischen Basen so bemessen wird, daß die Polymerisation bei einem pH zwischen 3,5 und 7 stattfindet, die Polymerisation startet,

c) bei einem pH-Wert zwischen 3,5 und 7 und einer Temperatur oberhalb 70 °C in einer ersten Stufe bis zu einem Umsatz von mindestens 50 % der Monomeren polymerisiert,

d) den Rest der Monomeren sowie weitere wäßrig basische Peroxodisulfat-Lösung, deren gehalt an organischen oder anorganischen Basen so bemessen wird, daß die Polymerisation bei einem pH zwischen 3,5 und 7 stattfindet, in einer oder mehreren weiteren Stufen zugibt,

e) die Polymerisation bei einem pH-Wert von 3,5 bis 7 und oberhalb 70 °C bis zu einem jeweiligen Umsatz von mindestens 50 % der Monomeren und in der letzten Stufe bis zu einem Umsatz von 85 bis 100 % fortführt.

Geeignete acyclische konjugierte Diene mit 4 bis 9 Kohlenstoffatomen sind z. B. Butadien-(1,3), 2-Methylbutadien-(1,3) (Isopren), 2,3-Dimethylbutadien-(1,3), Piperylen, 2-Neopentylbutadien-(1,3) und andere substituierte Diene wie beispielsweise 2-Chlorbutadien-(1,3) (Chloropren), 2-Cyanobutadien-(1,3) sowie substituierte geradkettige konjugierte Pentadiene und geradkettige oder verzweigte Hexadiene. Die Fähigkeit, mit Arylvinylmonomeren besonders gut zu copolymerisieren, machen Butadien-(1,3) zum bevorzugten Monomer.

Geeignete Arylvinylmonomere sind solche, bei denen die, gegebenenfalls in $\alpha$-Stellung alkylsubstituierte, Vinylgruppe direkt an einen aus 6 bis 10 Kohlenstoffatomen bestehenden aromatischen Kern gebunden ist. Beispielhaft seien genannt: Styrol und substituierte Styrole wie 4-Methylstyrol, 3-Methylstyrol, 2,4-Dimethylstyrol, 2,4-Diethylstyrol, 4-Isopropylstyrol, 4-Chlorstyrol, 2,4-Dichlorstyrol, Divinylbenzol, $\alpha$-Methylstyrol und Vinylnaphthalin. Aus Gründen der Zugänglichkeit und wegen der Fähigkeit insbesondere mit Butadien-(1,3) hervorragend zu copolymerisieren, stellt Styrol das bevorzugte Monomer dar.

Bis zu 25 Gew.-Teile der nicht-dissoziierenden Monomeren können durch eines oder mehrere von mit den oben angeführten Monomeren copolymerisierbaren Monomeren ersetzt werden. Hierzu zählen insbesondere Ester der Acryl- und/oder Methacrylsäure von Alkoholen mit bis zu 8 Kohlenstoffatomen sowie Diester aus Alkandiolen und $\alpha,\beta$-monoethylenisch ungesättigten Monocarbonsäuren wie Ethylenglykoldiacrylat und Butandiol-(1,4)-diacrylat, Amide der $\alpha,\beta$-monoäthylenisch ungesättigten Mono- und Dicarbonsäuren wie Acrylamid und Methacrylamid. Als weitere Comonomere kommen Vinylester von Carbonsäuren mit 1 bis 18 Kohlenstoffatomen, insbesondere Vinylacetat und Vinylpropionat, Vinylchlorid und Vinylidenchlorid, Vinylether wie Vinylmethylether, Vinylketone wie Vinylethylketon und heterocyclische Monovinyl-verbindungen wie Vinylpyridin in Betracht.

Neben den genannten Monomeren können zur Beeinflussung der Copolymerisat-Eigenschaften bekannte Kettenübertragungsmittel mitverwendet werden. Geeignet sind langkettige Alkylmercaptane, wie z. B. tert.-Dodecylmercaptan, Mercaptocarbonsäuren wie Thioglykolsäure, niedere Dialkyldixanthogenate, Tetrabromkohlenstoff sowie Bromethylbenzol. Die zu verwendende Menge hängt u. a. von der Wirksamkeit des Übertragungsmittels und von der Menge des eingesetzten Diens ab und ist dem Fachmann geläufig.

Wie bereits erwähnt, handelt es sich bei dem erfindungsgemäßen Verfahren um ein Polymerisationsverfahren, welches in 2 oder mehr Stufen durchgeführt wird, wobei sich die Anzahl der Stufen nach den Druckverhältnissen im Kessel und der angestrebten Endkonzentration des Latex richtet. Je nach Zahl der Polymerisationsstufen wird bei 2 Stufen etwa die Hälfte der gesamten nicht-dissoziierenden Monomeren vorgelegt, bei 3 Stufen etwa ein Drittel usw. Die Zugabe der Monomeren erfolgt also entsprechend der Anzahl der Stufen in etwa gleichen Teilen. Dies gilt auch für die Methacrylsäure, die jedoch auch in der ersten Stufe bereits vollständig zugegeben werden kann.

Die Polymerisation wird in der ersten Stufe so durchgeführt, daß in Umsatz von mindestens 50 % erreicht wird. Ein vollständiges Auspolymerisieren in der ersten Stufe ist in der Mehrzahl der Fälle unzweckmäßig, da diese Maßnahme vielfach zur Bildung von Ausscheidungen und Mikrokoagulat führt. Vorzugsweise wird die Polymerisation in erster Stufe bis zu einem Umsatz von 70 bis 85 Gew.-% geführt, anschließend eine zweite Charge der nicht-dissoziierenden Monomeren zugefügt, erneut mit wäßriger Peroxodisulfat-Lösung versetzt und bei einem pH-Wert zwischen 3,5 und 7 weiterpolymerisiert. Die Zugabe weiterer Methacrylsäure richtet sich nach der Gesamtmenge der Säure, die zwischen 1 und 6 Gew.-Teilen, bezogen auf Gesamtmonomere, liegen kann. Bei Verwendung von nur einem Gew.-Teil wird die Gesamtmenge an Methacrylsäure, in erster Stufe vorgelegt, bei Verwendung einer größeren Menge ist es jedoch meist günstiger, die Säure auf die einzelnen Polymerisationsstufen zu verteilen. In der zweiten und jeder folgenden Polymerisationsstufe wird so weiterpolymerisiert, daß die dann vorliegenden gesamten Monomeren bis zu einem Umsatz von mindestens 50 % polymerisiert sind. In der letzten Stufe wird schließlich so lange polymerisiert, bis eine Umsetzung von 85 bis 100 % der Monomeren erreicht ist. Vielfach ist es ausreichend, das Verfahren in nur zwei Stufen durchzuführen, wobei man in der ersten Stufe bis mindestens 50 % Umsatz polymerisiert und in der zweiten Stufe bis 85 bis 100 % Umsatz polymerisiert. Anschließend kann gegebenenfalls bei pH von 6 bis 8 der Latex in an sich bekannter Weise von Restmonomeren befreit und zur Erhöhung seiner mechanischen Stabilität auf einen pH-Wert von etwa 8 bis 10 eingestellt werden.

Nach dem erfindungsgemäßen Verfahren werden emulgatorfreie Kautschuklatices erhalten, welche eine sehr hohe Stabilität gegen chemische und mechanische Einflüsse besitzen, eine äußerst geringe Schaumentwicklung bei der Verarbeitung aufweisen, mit anderen emulgatorfreien oder emulgatorhaltigen Latices sowie mit flüssigen Phenolharzen verträglich sind und sich leicht durch Entzug von Wasser aufkonzentrieren lassen. Die daraus erhaltenen Polymerfilme und mit diesen Dispersionen hergestellte Artikel zeigen gegenüber solchen, die aus selbst geringe Mengen an Emulgatoren enthaltenden Dispersionen erhalten werden, wesentlich verbesserte Wasserfestigkeit, schnellere Trocknung und Härtung und eine ungleich höhere Haftfestigkeit auf den jeweiligen Substraten sowie eine weitaus geringere Neigung zur Verfärbung. Polymerisatfilme und -produkte mit verbesserter Wasserfestigkeit werden insbesondere aus alkalimetallfreien Latices erhalten, bei deren Herstellung Ammoniak zur Einstellung des pH-Wertes und Ammoniumperoxodisulfat als Initiator verwendet werden. Überraschenderweise zeichnen sich die erfindungsgemäß hergestellten Latices durch eine universelle Anwendbarkeit aus und eignen sich z. B. als Lederfinish, zur Bildung von Vliesen, zur Imprägnierung und Beschichtung von textilen Materialien und Papieren, zur Herstellung von Klebstoffen, Druckfarbenansätzen und wäßrigen Anstrichbinderformulierungen.

Die folgenden Beispiele erläutern das erfindungsgemäße Verfahren.

Beispiel 1

In einem 40 l-Reaktor aus rostfreiem Stahl mit Kreuzbalkenrührer wird eine Mischung aus 2 500 g Butadien-(1,3), 2 400 g Styrol und 111 g 90 %iger Methacrylsäure in 8 750 g Wasser bei 80 °C mit einer Lösung von 120 g Ammoniumperoxodisulfat und 30 ml 25 %iger wäßriger Ammoniak-Lösung in 500 g Wasser versetzt und bei 80 °C polymerisiert, bis nach 4 Stunden eine Feststoffkonzentration von etwa 20 Gew.-% erreicht ist. Während dieser Zeit liegt der pH-Wert der Emulsion zwischen 4,3 und 4,1. Anschließend werden 2 500 g Butadien-(1,3), 2 400 g Styrol und 111 g 90 %iger Methacrylsäure zugefügt, und die Emulsion erneut mit 30 g Ammoniumperoxodisulfat und 30 ml 25 %iger wäßriger Ammoniak-Lösung in 500 g Wasser versetzt und bei 80 °C während 10,5 Stunden weiterpolymerisiert. Der pH-Wert der Emulsion liegt während dieser zweiten Polymerisationsphase zwischen 4,3 und 4,6.

Nach Erreichen einer Konzentration von 50,5 Gew.-% Feststoff wird auf Raumtemperatur abgekühlt, mit 280 g 7 %iger Diethylhydroxylamin-Lösung versetzt, der Latex mit wäßriger Ammoniak-Lösung annähernd neutral gestellt und von Restmonomeren befreit. Anschließend wird mit wäßriger Ammoniak-Lösung ein pH von 9,2 eingestellt. Man filtriert von Ausscheidungen ab, die nur 130 g (feucht gewogen) betragen, und erhält einen Latex mit einem Feststoffgehalt von 49,6 % einem Teilchendurchmesser zwischen 320 und 340 nm und einer Oberflächenspannung von 47,2 mN/m.

Dieser Latex eignet sich zur Herstellung von Nadelfilzbodenbelägen und als Vorstrichlatex zur Verfestigung von Tufting-Ware.

Die folgenden Vergleichsbeispiele veranschaulichen den Einfluß des pH-Wertes und der Methacrylsäure auf die Polymerisation.

Vergleichsbeispiel 1

(ohne Ammoniak)

Der in Beispiel 1 beschriebene Versuch wird wiederholt, auf die Zugabe der wäßrigen Ammoniak-Lösungen in beiden Polymerisationsphasen jedoch verzichtet. Dadurch wird die Polymerisation bei einem pH-Wert zwischen 2,1 und 1,6 in der ersten Polymerisationsphase durchgeführt und eine Konzentration von 20 Gew.-% nach etwa 3,5 Stunden erreicht. In der zweiten Phase beträgt die Polymerisationszeit 11 Stunden, der pH-Wert liegt zwischen 1,5 und 1,4.

Nach Erreichen einer Konzentration von 49,7 Gew.-% wird wie in Beispiel 1 abgekühlt, abgestoppt, mit Ammoniak annähernd neutral gestellt und von Restmonomeren befreit. Man stellt mit verdünnter wäßriger Ammoniak-Lösung auf pH 9,0 und erhält einen Latex mit einer Feststoffkonzentration von 47,5 Gew.-% sowie erhebliche Mengen Koagulat. Der Teilchendurchmesser des abfiltrierten Latex liegt zwischen etwa 280 und 310 nm, die Oberflächenspannung beträgt 48,3 mN/m.

Vergleichsbeispiel 2

(ohne Methacrylsäure)

In einem 40 l-Autoklaven aus rostfreiem Stahl mit Kreuzbalkenrührer wird eine Mischung aus 2 500 g Butadien-(1,3) und 2 500 g Styrol in 11 250 g Wasser bei 80 °C mit einer Lösung von 150 g Ammoniumperoxodisulfat und 30 ml 25 %iger wäßriger Ammoniak-Lösung polymerisiert, bis nach 6,5 Stunden eine Feststoffkonzentration von etwa 20 Gew.-% erreicht ist. Während dieser ersten Polymerisationsphase fällt der pH-Wert der Emulsion von 8,5 auf 2,3. Anschließend fügt man nochmals 2 500 g Butadien-(1,3) und 2 500 g Styrol sowie eine wäßrige Lösung aus 100 g Ammoniumperoxodisulfat und 30 ml 25 %iger wäßriger Ammoniak-Lösung hinzu und läßt bei einem pH-Abfall von 8,0 auf 1,7 20 Stunden weiterpolymerisieren, bis eine Feststoffkonzentration von 44 Gew.-% erreicht ist. Man erhält nach dem Abstoppen und nach Aufarbeitung wie in Beispiel 1 einen Latex, der von einer großen Menge Koagulat abfiltriert werden muß.

Vergleichsbeispiel 3

(ohne Ammoniak und Methacrylsäure)

Das Vergleichsbeispiel 2 wird ohne Zugabe von Ammoniak in erster und zweiter Polymerisationsphase wiederholt. Dadurch verzögert sich die Polymerisationsgeschwindigkeit bei einem pH-Abfall von 2,4 auf 1,4, so daß eine Feststoffkonzentration von 19 Gew.-% erst nach 10 Stunden und eine Endkonzentration von 43,7 Gew.-% bei einem pH-Wert von 1,0 erst nach weiteren 25 Stunden trotz Nachaktivierung mit 20 g Ammoniumperoxodisulfat in 100 g Wasser bei 40 Gew.-% Feststoffgehalt erreicht werden. Man erhält einen instabilen Latex, der nach Beendigung der Polymerisation spontan koaguliert.

Vergleichsbeispiel 4

(mit Methacrylsäure, ohne Ammoniak)

Zu 10 000 g Wasser werden 2 500 g Butadien-(1,3), 2 400 g Styrol und 111 g 90 %ige Methacrylsäure in 250 g Wasser gegeben und mit einer Lösung von 150 g Ammoniumperoxodisulfat in 500 g Wasser die Polymerisation bei 80 °C gestartet. Bereits nach 3,5 Stunden wird eine Feststoffkonzentration von 20 Gew.-% erreicht. Der pH-Wert während der ersten Polymerisationsphase liegt zwischen 2,4 und 1,6. Anschließend fügt man 2 400 g Styrol, 2 500 g Butadien-(1,3), 111 g 90 %ige Methacrylsäure und eine Lösung von 100 g Ammoniumperoxodisulfat in 500 g Wasser hinzu. Nach weiteren 10 Stunden ist eine Feststoffkonzentration von 43,7 Gew.-% bei einem pH von 1,3 erreicht. Nach Abstoppen und Aufarbeiten wie in Beispiel 1 wird ein stabiler Latex erhalten, der allerdings erhebliche Mengen Koagulat aufweist.

Beispiel 2

In einem 40 l-Reaktor aus rostfreiem Stahl mit Kreuzbalkenrüher werden in 12 500 g Wasser ein Gemisch aus 1 200 g Styrol und 1 200 g Acrylnitril sowie 2 500 g Butadien-(1,3) und 111 g 90 %iger Methacrylsäure in 250 g Wasser und 100 g Methacrylamid mit einer Lösung von 50 g Ammoniumperoxodisulfat in 500 g Wasser und 30 ml 25 %iger wäßriger Ammoniak-Lösung bei 75 °C zur Polymerisation gebracht. Nach 4,5 Stunden Polymerisationszeit bei 75 °C ist eine Feststoffkonzentration von 25,3 Gew.-% erreicht.

Während dieser Zeit steigt der pH-Wert von 4,6 auf 5,3. Daraufhin wird eine Mischung aus 1 200 g Acrylnitril, 1 200 g Styrol und 2 500 g Butadien-(1,3) zugegeben und mit einer Lösung von 100 g Ammoniumperoxodisulfat und 30 ml 25 %iger wäßriger Ammoniak-Lösung in 500 g Wasser versetzt. Nach weiteren 8 Stunden ist eine Konzentration von 43,2 Gew.-% Feststoff erreicht, so daß der Kesselinhalt abgekühlt und die Polymerisation mit 280 g 7 %iger Diethylhydroxylamin-Lösung abgestoppt werden kann. Während der zweiten Polymerisationsphase fällt der pH-Wert von 6,8 auf 6,5. Der Latex wird von Restmonomeren befreit und mit wäßriger Ammoniak-Lösung auf pH 9,0 eingestellt. Nach dem Abfiltrieren von 300 g (feucht gewogenen) Ausscheidungen beträgt die Feststoffkonzentration 42,0 Gew.-%, die Oberflächenspannung liegt bei 50,5 mN/m. Mit Teilchendurchmessern zwischen 360 und 670 nm weist der Latex eine breite Teilchengrößenverteilung auf.

Dieses Produkt ist mit hohen Mengen an flüssigen Phenol-Formaldehydharzen einwandfrei mischbar. Deshalb eignet es sich als Elastifizierungsmittel von Artikeln, die durch Verwendung von Phenol-Formaldehydharzen hergestellt werden, z. B. Separator-Platten.

**Patentansprüche**

1. Verfahren zur Herstellung eines emulgatorfreien Kautschuklatex aus 1 bis 6 Gew.-Teilen Methacrylsäure und 94 bis 99 Gew.-Teilen eines Gemisches aus 10 bis 90 Gew.-Teilen eines oder mehrerer acyclischer konjugierter Diene mit 4 bis 9 Kohlenstoffatomen und 10 bis 90 Gew.-Teilen eines oder mehrerer Arylvinylmonomerer mit 8 bis 12 Kohlenstoffatomen und/oder (Meth)acrylnitril, wobei die Menge an (Meth)acrylnitril maximal 50 Gew.-Teile beträgt, dadurch gekennzeichnet, daß man

a) eine wäßrige Emulsion herstellt, indem man mindestens einen Teil von Methacrylsäure, einen Teil von Dien und weiteren Monomeren zu Wasser zugibt,

b) durch Zugabe einer wäßrig basischen Lösung eines Peroxodisulfats, deren gehalt an organischen oder anorganischen Basen so bemessen wird, daß die Polymerisation bei einem pH zwischen 3,5 und 7 stattfindet, die Polymerisation startet,

c) bei einem pH-Wert zwischen 3,5 und 7 und einer Temperatur oberhalb 70 °C in einer ersten Stufe bis zu einem Umsatz von mindestens 50 % der Monomeren polymerisiert,

d) den Rest der Monomeren sowie weitere wäßrig basische Peroxodisulfat-Lösung, deren Gehalt an organischen oder anorganischen Basen so bemessen wird, daß die Polymerisation bei einem pH zwischen 3,5 und 7 stattfindet, in einer oder mehreren weiteren Stufen zugibt,

e) die Polymerisation bei einem pH-Wert von 3,5 bis 7 und oberhalb 70 °C bis zu einem jeweiligen Umsatz von mindestens 50 % der Monomeren und in der letzten Stufe bis zu einem Umsatz von 85 bis 100 % der Monomeren fortführt.

2. Verfahren nach Anspruch 1, dadurch gekennzeichnet, daß bis zu 25 Gew.-Teile der nichtdissoziierenden Monomeren durch andere copolymerisierbare Monomeren ersetzt werden.

3. Verfahren nach Anspruch 1 und 2, dadurch gekennzeichnet, daß die Gesamtmenge des als Initiator verwendeten Peroxodisulfats 0,5 bis 3,0 Gew.-Teile, bezogen auf die Gesamtmengen an Monomeren, beträgt.

4. Verfahren nach Anspruch 1 bis 3, dadurch gekennzeichnet, daß die Polymerisation in Gegenwart eines Kettenübertragungsmittels durchgeführt wird.


**Claims**

1. Process for the production of an emulsifier-free rubber latex from 1 to 6 parts by weight of methacrylic acid and 94 to 99 parts by weight of a mixture of 10 to 90 parts by weight of one or more acyclic conjugated dienes containing 4 to 9 carbon atoms and 10 to 90 parts by weight of one or more arylvinyl monomers containing 8 to 12 carbon atoms and/or (meth)acrylonitrile, the quantity of (meth)acrylonitrile being at most 50 parts by weight, characterised in that

a) an aqueous emulsion is prepared by adding at least one part of methacrylic acid, one part of diene and other monomers to water,

b) polymerisation is initiated by adding an aqueous basic solution of a peroxodisulphate, which contains such a quantity of organic or inorganic bases that the polymerisation takes place at a pH of between 3.5 and 7,

c) polymerisation is carried out in a first stage at a pH value of between 3.5 and 7 and a temperature above 70 °C until at least 50 % of the monomers have been converted,

d) the remainder of the monomers and more aqueous basic peroxodisulphate solution, which contains such a quantity of organic or inorganic bases that the polymerisation takes place at a pH of between 3.5 and 7, are added in one or more further stages,

e) the polymerisation is continued at a pH value of 3.5 to 7 and at above 70 °C until at least 50 % of the monomers have, in each case, been converted and, in the final stage, until 85 to 100 % of the monomers have been converted.

2. Process according to Claim 1, characterised in that up to 25 parts by weight of the non-dissociating monomers are replaced by other copolymerisable monomers.

3. Process according to Claim 1 and 2, characterised in that the total quantity of the peroxodisulphate used as initiator is 0.5 to 3.0 parts by weight, based on the total quantities of monomers.

4. Process according to Claim 1 to 3, characterised in that the polymerisation is carried out in the presence of a chain-transfer agent.


**Revendications**

1. Procédé de production d'un latex de caoutchouc sans émulsionnant à partir de 1 à 6 parties en poids d'acide méthacrylique et de 94 à 99 parties en poids d'un mélange de 10 à 90 parties en poids d'un ou plusieurs diènes conjugués acycliques ayant 4 à 9 atomes de carbone et de 10 à 90 parties en poids d'un ou plusieurs monomères arylvinyliques ayant 8 à 12 atomes de carbone et/ou de (méth)acrylonitrile, la quantité de (méth)acrylonitrile s'élevant au maximum à 50 parties en poids, caractérisé en ce que

a) on prépare une émulsion aqueuse en ajoutant à de l'eau au moins une partie d'acide méthacrylique, une partie de diène et d'autres monomères,

b) on amorce la polymérisation par l'addition d'une solution aqueuse basique d'un peroxodisulfate dont la teneur en bases organiques ou inorganiques est calculée de manière que la polymérisation ait lieu à un pH compris entre 3,5 et 7,

c) on polymérise à un pH d'une valeur de 3,5 à 7 et à une température supérieure à 70 °C dans une première étape jusqu'à un degré de transformation d'au moins 50 % des monomères,

d) on ajoute en une ou plusieurs étapes le reste des monomères ainsi qu'une quantité supplémentaire de solution aqueuse basique de peroxodisulfate dont la teneur en bases organiques ou inorganiques est calculée de manière que la polymérisation ait lieu à un pH compris entre 3,5 et 7,

e) on poursuit la polymérisation à un pH d'une valeur de 3,5 à 7 et au-dessus de 70 °C jusqu'à un degré de transformation d'au moins 50 % des monomères dans chaque cas et, dans la dernière étape, jusqu'à un degré de transformation des monomères de 85 à 100 %.

2. Procédé suivant la revendication 1, caractérisé en ce qu'on remplace jusqu'à 25 parties en poids des monomères ne se dissociant pas par d'autres monomères copolymérisables.

3. Procédé suivant les revendications 1 et 2, caractérisé en ce que la quantité totale de peroxodisulfate utilisée comme initiateur va de 0,5 à 3,0 parties en poids, par rapport aux quantités totales de monomères.

4. Procédé suivant les revendications 1 à 3, caractérisé en ce que la polymérisation est conduite en présence d'un agent de transfert de chaîne.